## Europäisches Patentamt
## European Patent Office
## Office européen des brevets

(19)

(11) Numéro de publication: **0 200 904**
**B1**

(12) # FASCICULE DE BREVET EUROPÉEN

(45) Date de publication du fascicule du brevet:
25.01.89

(51) Int. Cl.⁴: **A 23 L 3/00**

(21) Numéro de dépôt: **86104165.5**

(22) Date de dépôt: **26.03.86**

(54) Procédé et dispositif de traitement thermique homogène de liquide ou de solution en mouvement.

(30) Priorité: **06.05.85 CH 1906/85**

(43) Date de publication de la demande:
**12.11.86 Bulletin 86/46**

(45) Mention de la délivrance du brevet:
**25.01.89 Bulletin 89/4**

(84) Etats contractants désignés:
**AT BE CH DE FR GB IT LI LU NL SE**

(56) Documents cité:
**CA-A-1 034 734**
**DE-C-706 782**
**DE-C-927 849**
**FR-A-979 591**
**GB-A-994 450**
**US-A-1 883 222**
**US-A-2 833 657**

(73) Titulaire: **SOCIETE DES PRODUITS NESTLE S.A.,**
**Case postale 353, CH- 1800 Vevey (CH)**

(72) Inventeur: **Le Viet, Toai, Sentier de Clies, CH- 1800**
**Vevey (CH)**

LIBER, STOCKHOLM 1989

EP 0 200 904 B1

## Description

L'invention concerne un procédé de traitement thermique homogène de liquide ou de solution en mouvement. L'invention concerne en outre le dispositif pour la mise en oeuvre de ce procédé.

Il est connu de traiter thermiquement de manière homogène des liquides, par exemple dans un réacteur muni d'ailettes ou de pales qui ont pour fonction de brasser et de faire avancer le produit à traiter. Ce type de dispositif présente une série d'inconvénients qui rendent son utilisation problématique. En effet, la présence d'ailettes ou de pales pour le raclage mécanique du produit oblige à avoir recours à une construction souvent complexe sujette éventuellement à des défaillances d'ordre technique et le problème de l'usure des pièces mécaniques ainsi utilisées peut en outre conduire à des coûts prohibitifs de pièces et de main-d'oeuvre. D'autre part, un tel dispositif n'est pas toujours satisfaisant dans sa fonction technique même, surtout avec des produits plus visqueux. En effet, le raclage ne se fait pas contre la paroi du réacteur, de sorte qu'une partie du produit reste collée, forme une croûte et brûle, ce qui perturbe le processus de traitement thermique homogène et peut conduire à des blocages et à des obligations d'arrêt et de nettoyage de l'ensemble du réacteur.

Le brevet CA 103 47 34 concerne un appareil pour la stérilisation et la destruction du facteur antitrypsique de certains aliments par micro-ondes. Cet appareil ne permet pas de traitement thermique homogène. Il en est de même du brevet DE 927 849 qui concerne une installation de stérilisation de lait circulant à l'intérieur d'un guide d'onde. Le tube conduisant le liquide est mince, de sorte qu'il n'y a pas d'effet de brassage.

Le procédé objet de la présente invention permet de pallier à ces inconvénients en éliminant la majeure partie des éléments mécaniques et en garantissant l'absence d'adhérence sur les parois du réacteur, tout en assurant une parfaite fiabilité de fonctionnement et un bon bras sage du produit à traiter.

L'invention concerne un procédé de traitement thermique homogène de liquide ou de solution en mouvement dans un tube cylindrique vertical, dans lequel on induit un mouvement tourbillonnaire hélicoïdal audit liquide ou solution par application d'énergie micro-ondes afin d'obtenir une température finale sensiblement constante.

Le principe du procédé selon l'invention repose sur le fait que le flux de liquide à traiter est soumis dans le tube cylindrique vertical à la résultante de deux forces: d'une part la force de la vitesse de déplacement du liquide et d'autre part la force représentant le pouvoir de pénétration de l'énergie micro-ondes. La première force citée est constante quel que soit le lieu où l'on se trouve dans le tube cylindrique vertical. Par contre, la seconde force est variable suivant la température du milieu considérée: plus la température du milieu est élevée, plus le pouvoir de pénétration augmente. Ceci signifie que le liquide lors de son entrée dans le tube vertical est soumis à une force de pénétration micro-ondes très faible et qui augmente au fur et à mesure que le liquide se déplace dans le champ d'énergie micro-ondes, c'est-à-dire au fur et à mesure de l'augmentation de température. Le flux de liquide est donc soumis à la résultante de ces deux forces précitées, de sorte que ce liquide ne monte pas verticalement mais suit un mouvement tourbillonnaire aplati, en raison de l'augmentation du vecteur force de pénétration microondes lorsque le liquide se rapproche de la sortie du tube cylindrique vertical. Ce mouvement tourbillonnaire hélicoïdal crée par conséquent un brassage du liquide ou de la solution à traiter par des voies non mécaniques, de manière à obtenir à la sortie du tube cylindrique un liquide dont la température est pratiquement constante.

Le procédé selon l'invention peut avoir plusieurs applications pratiques: soit le but recherché est de stériliser un liquide ou une solution en étant sûr que tout le milieu soit à la température souhaitée, de manière à obtenir une stérilisation irréprochable, soit on souhaite amener un milieu fluide à une température donnée pour lui conférer des caractéristiques organoleptiques bien précises ou pour lui faire subir un post-traitement à la température homogène finale envisagée.

Selon l'invention, on peut traiter tout type de liquide ou de solution, à condition qu'ils aient une viscosité mesurée à 50°C inférieure à $3.10^4$ centipoises (30 Pa.s). On traite par exemple de l'eau, des solutions sucrées, de la mélasse, de la pure pâte de cacao, de la crème, du lait etc..

Lors de la mise en oeuvre du procédé selon l'invention, il y a deux paramètres essentiels qui sont à régler pour un liquide ou une solution déterminée, à savoir le débit et la puissance microondes ce sont en effet ces deux paramètres qui conditionnent la force résultante à laquelle sera soumis le liquide. Si on considère un liquide ou une solution se déplaçant du bas vers le haut, on choisit un débit et une puissance d'énergie micro-ondes de manière à ce que ledit liquide ou ladite solution soit soumis à l'énergie micro-ondes pendant un temps suffisant permettant d'obtenir un produit dont l'état thermique final est homogène et dont la température finale est constante. Il est bien entendu que ces deux variables sont fonction de la température initiale du liquide et de la température finale que l'on souhaite conférer audit liquide plus cette différence de température est élevée, plus le débit devra être lent et l'énergie micro-ondes absorbée élevée.

L'invention concerne également un dispositif de traitement thermique homogène de liquide ou de solution en mouvement qui comprend un tube cylindrique vertical de circulation de liquide logé dans un applicateur micro-ondes et comportant une colonne centrale et au moins un plateau perforé disposé perpendiculairement à l'axe de ladite colonne centrale et au moins une source d'énergie micro-ondes.

La fonction de la colonne centrale et du plateau perforé est d'assurer une bonne répartition de vitesse du flux de liquide sur toute la hauteur et sur tout le diamètre du tube cylindrique vertical. Dans le cas d'un tube cylindrique vide, la vitesse de déplacement du liquide est maximale au centre et avoisine zéro sur les bords dudit cylindre, ce qui ne peut en aucun cas garantir une homogénéité thermique. Le tube cylindrique vertical ainsi que la colonne centrale et le plateau perforé sont en une matière n'absorbant pas l'énergie micro-ondes, par exemple du verre, de la céramique, du téflon, de la porcelaine ou du téflon armé de fibres de verre. Le tube cylindrique vertical est de préférence en verre.

La source micro-ondes est disposée latéralement à l'extérieur de l'applicateur. Le nombre de sources micro-ondes et leur puissance ne sont pas critiques; ils sont déterminés en fonction de l'élévation de température souhaitée. Dans une forme de réalisation préférée on dispose de deux sources d'énergie micro-ondes décalées de long du tube vertical et disposées sensiblement diamétralement opposées par rapport à l'axe dudit tube cylindrique vertical. Il est également possible de disposer les deux sources micro-ondes dans un même plan perpendiculaire à l'axe du tube cylindrique; dans ce cas, la seule condition est que les deux sources ne soient pas face à face, mais côte à côte.

Le dispositif selon l'invention comporte préférablement deux plateaux perforés; dans ce cas la fonction de ce second plateau est de freiner le courant thermique de manière à éviter un emballement, qui pourrait créer des disparités de température.

Le plateau comporte des perforations de diamètre le plus élevé sur le pourtour du plateau, de diamètre intermédiaire au centre du plateau et de diamètre le plus faible entre les deux types de perforations précitées. Le rapport des sections des trous par rapport à la section totale du plateau est de l'ordre de 1/8.

L'épaisseur du tube cylindrique vertical ne dépasse pas 10 % du diamètre intérieur dudit tube.

De préférence, la colonne centrale disposée dans ce tube vertical ne s'étend pas sur toute la hauteur dudit tube, mais seulement jusqu'au lieu du second plateau perforée qui se trouve sensiblement aux 2/3 de la hauteur de ce tube. La distance séparant les deux plateaux perforés est de l'ordre du tiers de la hauteur du tube vertical.

Le dispositif selon l'invention permet de manière simple, propre, efficiente, rapide et reproductible d'amener un liquide d'une température initale à une température homogène finale, sans brassage mécanique et sans formation de croûte sur les parois.

La suite de la description est faite en référence aux figures sur lesquelles:

Fig. 1    est une représentation schématique du dispositif selon l'invention et

Fig. 2    est une coupe selon la ligne 2-2 de la Fig. 1.

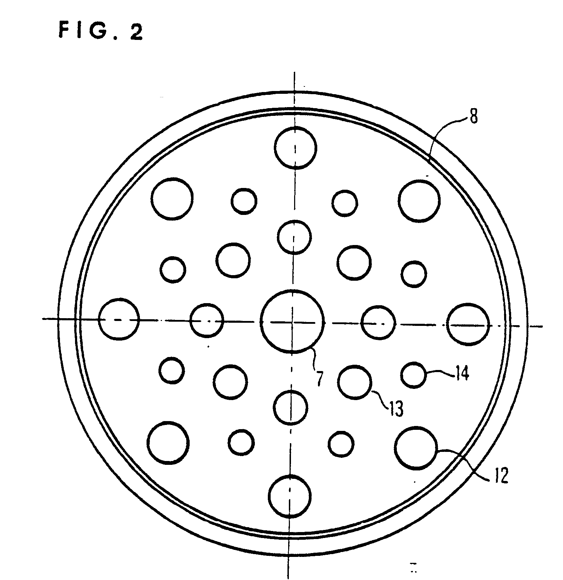

Le dispositif selon l'invention comprend un tube cylindrique vertical (1), de préférence en verre, avec une canalisation d'arrivée (2) et une canalisation de sortie (3) reliées audit tube par des couvercles en acier (10) et des raccords (4). Ce tube est logé dans un applicateur micro-ondes (5). L'ensemble est disposé sur un support (6). La partie supérieure du tube (1) et le couvercle supérieur (10) sont isolés dans une cage (21). Le tube cylindrique (1) comporte une colonne centrale (7) et deux plateaux perforés (8). Le thermomètre (11) permet de surveiller la température du liquide à sa sortie. On dispose finalement deux sources d'énergie micro-ondes (9) sur les côtés du tube vertical (1). La Fig. 2 montre la répartition des perforations sur le plateau (8) logé dans le tube (1); le plateau comporte les plus grandes perforations (12) sur son pourtour, les perforations de dimension intermédiaire (13) à proximité de la colonne centrale (7) et les perforations les plus petites (14) entre les perforations (12) et (13). Le nombre de ces perforations est variable, de préférence de l'ordre de 5 à 15 par type de perforations.

Le fonctionnement de ce dispositif est le suivant: on dispose d'un liquide (17) dans une cuve (16) montée sur un support (19). On ouvre la vanne (18) et on met la pompe (15) en marche de manière à amener le liquide dans le tube cylindrique (1). Quand le niveau du liquide atteint les 2/3 de la hauteur du tube, on met en marche les deux sources micro-ondes (9). Le liquide s'élève dans le tube (1), est soumis au champ d'énergie micro-ondes et s'écoule par la canalisation (3) dans la cuvette de réception (20). Il est bien entendu que le liquide n'atteint la température souhaitée qu'au bout d'un certain laps de temps, par exemple de l'ordre d'une dizaine de minutes si on chauffe de l'eau de 50 à 100° C. On obtient alors le liquide à la température désirée soit à des fins de stérilisation, soit pour faire subir au liquide un post-traitement, soit pour lui conférer des propriétés organoleptiques spécifiques.

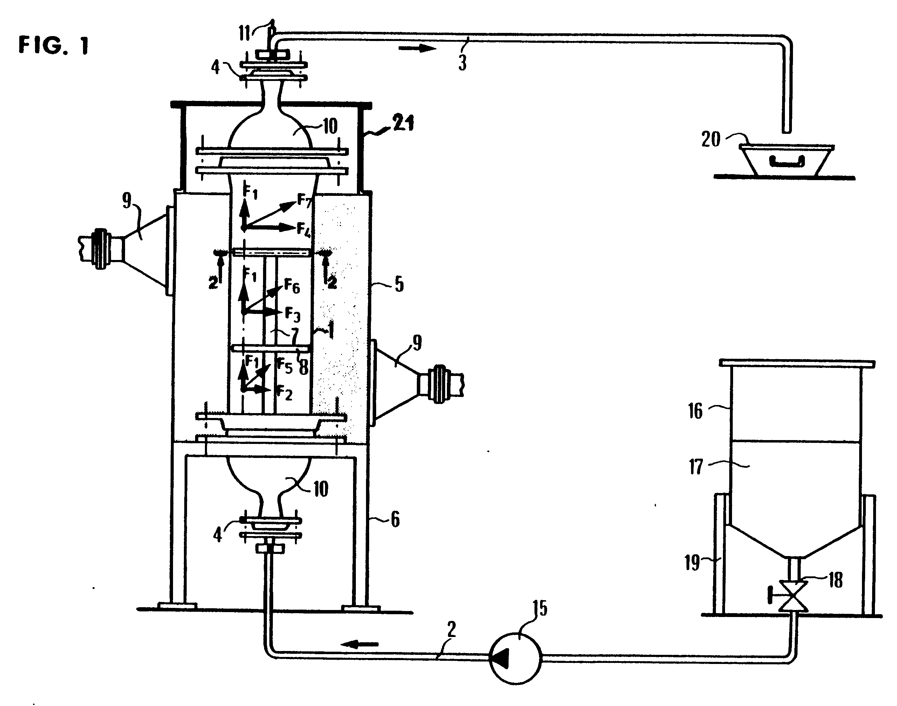

On a finalement indiqué sur la Fig. 1 les forces auxquelles est soumis le courant de liquide à traiter. Comme déjà mentionné ci-dessus, le pouvoir de pénétration de l'énergie micro-ondes croît avec la température du liquide. La force qui lui est associée croît donc de $F_2$, $F_3$ à $F_4$, à mesure qu'on monte dans le tube (1). Comme la force $F_1$ associée au mouvement du liquide reste constante sur toute la hauteur du tube, on obtient des résultantes de force $F_5$, $F_6$ et $F_7$ dont l'intensité augmente et dont l'angle par rapport à l'horizontale diminue. Ces différentes résultantes expliquent bien le mouvement hélicoïdal induit et permettent également de mettre en évidence que le mouvement tourbillonnaire augmente à mesure que la température du fluide s'élève. La suite de la description est faite en référence à l'exemple ci-dessous.

**Exemple**

On utilise le dispositif de la Fig. 1 avec deux sources micro-ondes de 5 kW chacune, un tube cylindrique de 1 mètre de haut, de 18 cm de diamètre et comportant deux plateaux et une colonne centrale de 3 cm de diamètre et de 60 cm de haut. Les perforations ont des diamètres respectifs de 15, 8 et 12 mm et ils sont au nombre de 8 pour chaque type de perforations.

Le fluide traité est de la mélasse qu'on déplace à un débit de 70 kg/heure sous une pression de 2 Bars et qu'on veut passer de la température initiale de 70° C à une température finale de 150° C. Avec les dispositifs connus, on ne peut pas élever la température de la mélasse au-dessus de 80° C. En effet, à cette température la mélasse mousse et toute élévation supplémentaire de température est impossible.

Il est intéressant de caraméliser la mélasse à une température de 150° C pour lui conférer des propriétés organoleptiques spécifiques. On utilise ensuite cette mélasse traitée pour la mélanger avec du café en poudre.

**Revendications**

1. Procédé de traitement thermique homogène de liquide ou de solution en mouvement dans un tube cylindrique vertical, caractérisé en ce qu'on induit un mouvement tourbillonnaire hélicoïdal audit liquide ou solution par application d'énergie micro-ondes afin d'obtenir une température finale sensiblement constante.

2. Procédé selon la revendication 1, caractérisé en ce qu'on utilise un liquide ou une solution ayant une viscosité inférieure à $3.10^4$ centipoises (30 Pa.s) de préférence de la mélasse, de la pure pâte de cacao, de la crème, du lait.

3. Procédé selon la revendication 1 ou 2, caractérisé en ce que le liquide ou la solution se déplacent du bas vers le haut et en ce qu'on choisit un débit et une puissance d'énergie micro-ondes de manière à ce que ledit liquide ou ladite solution soit soumis à l'énergie micro-ondes pendant un temps suffisant permettant d'obtenir un produit dont l'état thermique final est homogène et dont la température finale est constante.

4. Dispositif pour la mise en oeuvre du procédé selon l'une des revendications 1 à 3, caractérisé en ce qu'il comprend un tube cylindrique vertical de circulation de liquide logé dans un applicateur micro-ondes et comportant une colonne centrale et au moins un plateau perforé disposé perpendiculairement à l'axe de ladite colonne centrale et au moins une source d'énergie micro-ondes.

5. Dispositif selon la revendication 4, caractérisé en ce qu'il comporte deux plateaux perforés et deux sources d'énergie micro-ondes disposées latéralement et décalées le long du tube vertical et sensiblement diamètralement opposées par rapport à l'axe dudit tube vertical.

6. Dispositif selon l'une des revendications 4 ou 5, caractérisé en ce que le plateau comporte des perforations de diamètre le plus élevé sur le pourtour du plateau, de diamètre intermédiaire au centre du plateau et de diamètre le plus faible entre les deux types de perforations précitées.

**Patentansprüche**

1. Verfahren zu homogenen Wärmebehendeln einer Flüssigkeit oder Lösung, die sich in einem vertikalen zylindrischen Rohr bewegt, dadurch gekennzeichnet, daß man oer Flüssigkeit oder Lösung durch Beaufschlagung mit Mikrowellenenergie eine wendelförmige Wirbelbewegung induziert, um eine im wesentlichen konstante Endtemperatur zu erhalten.

2. Verfahren nach Anpruch 1, dadurch gekennzeichnet, daß man eine Flüssigkeit oder Lösung verwendet, die eine Viskosität von weniger als $3.10^4$ cP (30 Pa.s) afweist, vorzugsweise Melasse, Kakaomasse, Rahm, Milch.

3. Verfahren nach Anspruch 1 oder 2, dadurch gekennzeichnet, daß die Flüssigkeit oder Lösung sich von unten nach oben bewegt und daß man den Durchsatz und die Mikrowellenenergie derart wählt, daß die Flüssigkeit oder Lösung der Mikrowellenenergie während einer Zeitspanne ausgesetzt ist, die ausreicht, um ein Produkt zu erhalten, dessen endgültiger Wärmezustand homogen und dessen Endtemperatur konstant ist.

4. Vorrichtung zur Durchführung des Verfahrens nach einem der Ansprüche 1 bis 3, gekennzeichnet durch ein vertikales zylindrisches Rohr für die Zirkulation oer Flüssigkeit, das in einer Mikrowellenenergie-Beaufschlagungseinrichtung angeordnet ist und eine zentrale Säule sowie zumindest eine perforierte Scheibe aufweist, die senkrecht zur Achse der zentralen Säule angeordnet ist, und zumindest eine Mikrowellenenerigiequelle.

5. Vorrichtung nach Anspruch 4, dadurch gekennzeichnet, daß sie zwei perforierte Scheiben und zwei Mikrowellenenergiequellen aufweist, die seitlich und entlang des vertikalen Rohres versetzt sowie einander bezüglich der Achse des vertikalen Rohres im wesentlichen diametral gegenüberliegend angeordnet sind.

6. Vorrichtung nach Anspruch 4 oder 5, dadurch gekennzeichnet, daß die Scheibe Perforationen mit einem größeren Durchmesser am Scheibenumfang, mit einem mittleren Durchmesser in der Scheibemitte und mit einem kleineren Durchmesser zwischen den beiden vorgenannten Perforationstypen aufweist.

## Claims

1. A process for the homogeneous heat treatment of a liquid or solution in motion in a vertical cylindrical tube, characterized in that a helical swirling movement is induced in said liquid or solution by application, of microwave energy so as to obtain a substantially constant final temperature.

2. A process as claimed in Claim 1, characterized in that a liquid or solution having a viscosity below $3.10^4$ centipoises (30 Pa.s), preferably molasses, pure cocoa paste, cream, milk, is used.

3. A process as claimed in Claim 1 or 2, characterized in that the liquid or the solution moves upwards and in that the throughput and the microwave energy power are selected so that said liquid or said solution is subjected to the microwave energy for a sufficiently long time to obtain a product of which the final thermal state is homogeneous and of which the final temperature is constant.

4. An apparatus for carrying out the process claimed in any of Claims 1 to 3, characterized in that it comprises a vertical cylindrical circulation tube for the liquid situated in a microwave applicator and comprising a central column and at least one perforated plate arranged perpendicularly to the axis of said central column and at least one microwave energy source.

5. An apparatus as claimed in Claim 4, characterized in that it comprises two perforated plates and two microwave energy sources arranged late rally and at a distance apart along the vertical tube and substantially diametrically opposite in relation to the axis of said vertical tube.

6. An apparatus as claimed in Claim 4 or 5, characterized in that the plate comprises perforations of largest diameter at its periphery, of intermediate diameter at its center and of smallest diameter between the two aforementioned types of perforations.

**FIG. 1**

FIG. 2